# FASCICULE DE BREVET EUROPEEN

(11) **EP 2 326 828 B1**
(45) Date de publication et mention de la délivrance du brevet: **10.07.2013**
(21) Numéro de dépôt: 09741373.6
(22) Date de dépôt: 04.09.2009
(51) Int. Cl.: F03B 3/12

(54) **ROUE DE TYPE FRANCIS POUR MACHINE HYDRAULIQUE, MACHINE HYDRAULIQUE COMPRENANT UNE TELLE ROUE ET PROCÉDÉ D'ASSEMBLAGE D'UNE TELLE ROUE**
FRANCIS-LAUFRAD FÜR EINE HYDRAULISCHE MASCHINE, HYDRAULISCHE MASCHINE MIT SOLCH EINEM LAUFRAD UND VERFAHREN ZUM MONTAGE SOLCH EINES LAUFRADS
FRANCIS RUNNER FOR A HYDRAULIC MACHINE, HYDRAULIC MACHINE INCLUDING SUCH A RUNNER, AND METHOD FOR ASSEMBLING SUCH A RUNNER

(30) Priorité: 05.09.2008 FR 0855981
(43) Date de publication de la demande: 01.06.2011
(73) Titulaire: ALSTOM Hydro France, 92300 Levallois Perret (FR)
(72) Inventeur: BOUVET, Yves, F-38660 La Terrasse (FR); TASSY, Fabrice, F-38120 Saint-egreve (FR); MATHIEU, Louis, Sorel-tracy, Quebec J3R5E8 (CA); ROSSI, Georges, F-38330 Saint Ismier (FR)
(74) Mandataire: Myon, Gérard Jean-Pierre
(86) Numéro de dépôt international: PCT/FR2009/051676
(87) Numéro de publication internationale: WO 2010/026349

(56) Documents cités:
- EP-A- 1 744 056
- WO-A-2008/034492
- CA-A1- 2 438 429
- FR-A- 1 267 669
- US-A- 3 918 627

## Description

La présente invention concerne une roue de type Francis pour machine hydraulique, une machine hydraulique comprenant une telle roue, ainsi qu'un procédé d'assemblage d'une telle roue.

Au sens de la présente invention, une machine hydraulique peut être une turbine, une pompe ou une turbine-pompe utilisée, par exemple, dans une usine de production d'hydro-électricité.

L'invention concerne en particulier une roue de type Francis pour machine hydraulique destinée à être traversée par un écoulement forcé d'eau. Un tel écoulement a pour effet d'entraîner la roue en rotation, lorsque la machine est une turbine. Un tel écoulement résulte de cette rotation, lorsque la machine est une pompe.

Dans le cadre d'une machine hydraulique, il est connu d'utiliser des roues de type Francis disposant d'une ceinture, d'un plafond ainsi que d'aubes s'étendant entre la ceinture et le plafond, voir par exemple FR 1 267 669.

Une roue peut être monobloc, le plus souvent moulée ou mécano-soudée. Une telle roue étant de dimensions globales imposantes, sa réalisation a un coût non négligeable. Par ailleurs, la fabrication d'une telle roue, d'une part, nécessite un savoir-faire de plus en plus rare, et d'autre part, pose des problèmes d'hygiène et de sécurité du fait de la nécessité de se rendre dans les canaux hydrauliques de la roue pour notamment l'opération de soudage et de meulage.

Le but de la présente invention est de prévoir une roue dont la fabrication est aisément industrialisable, tout en garantissant un niveau de qualité satisfaisant.

A cet effet, l'invention a pour objet une roue de type Francis pour machine hydraulique, comportant :
- une ceinture à symétrie de révolution autour d'un axe central de la roue,
- un plafond à symétrie de révolution autour de l'axe, et
- une pluralité d'aubes s'étendant entre le plafond et la ceinture, caractérisée en ce que la roue comprend au moins deux éléments définissant en partie au moins la ceinture et/ou deux éléments définissant en partie au moins le plafond, et en ce qu'au moins un bord d'une aube est engagé entre ces deux éléments définissant la ceinture et/ou le plafond.

Grâce à la roue selon l'invention, son fabricant est en mesure de palier les problèmes liés, à la fois, à la qualité, au délai et au coût de réalisation de la roue.

Suivant d'autres caractéristiques avantageuses de la roue conforme à l'invention, prises isolément ou selon toutes les combinaisons techniquement possibles :
- le bord inférieur et/ou le bord supérieur d'au moins une aube affleure la surface extérieure de la ceinture et/ou du plafond ;
- la roue comprend au moins deux éléments de ceinture et deux éléments de plafond, chaque élément étant fixé entre deux aubes adjacentes par soudage ;
- la roue comprend au moins un premier sous-ensemble, défini par une première partie de la ceinture et une première partie du plafond, les deux parties étant reliées à une première aube, le premier sous-ensemble étant moulé, et un deuxième sous-ensemble, défini par une deuxième partie de la ceinture et une deuxième partie du plafond, les deux parties étant reliées à une deuxième aube, le deuxième sous-ensemble étant moulé et soudé au premier sous-ensemble ;
- au moins une des aubes comprend deux congés latéraux en regard l'un de l'autre et disposés à proximité d'au moins un bord de soudage avec la ceinture et/ou avec le plafond ;
- les congés latéraux sont usinés dans l'aube ;
- les congés latéraux définissent un rétrécissement local.

L'invention a également pour objet une machine hydraulique comprenant une roue telle que décrite ci-dessus.

En outre, l'invention a pour objet un procédé d'assemblage d'une roue telle qu'exposée ci-dessus. Selon ce procédé :
- on fabrique des éléments de ceinture et/ou de plafond, et
- on assemble les éléments de ceinture et/ou de plafond par soudage et/ou par moulage, avec engagement d'au moins un bord d'une aube entre deux éléments de ceinture et/ou de plafond.

L'invention sera mieux comprise à la lecture de la description qui va suivre, donnée uniquement à titre d'exemple non limitatif et faite en se référant aux dessins annexés sur lesquels :
- la figure 1 est une coupe axiale d'une roue selon la présente invention ;
- la figure 2 est vue de dessus de la roue de la figure 1 ;
- la figure 3 est une section partielle à plus grande échelle de la roue des figures 1 et 2, selon la ligne III-III à la figure 2 et alors que la roue est en cours de fabrication ;
- la figure 4 est une vue à plus grand échelle, correspondant au détail IV à la figure 3, pour une roue conforme à un deuxième mode de réalisation ;
- la figure 5 est une vue analogue à la figure 4 pour une roue conforme à un troisième mode de réalisation ;
- la figure 6 est une vue de dessus d'une roue qui ne fait pas partie de la présente invention ; ; et
- la figure 7 est une section partielle à plus grande échelle de la roue de la figure 6, selon la ligne VII-VII à la figure 4 et alors que la roue est en cours de fabrication.

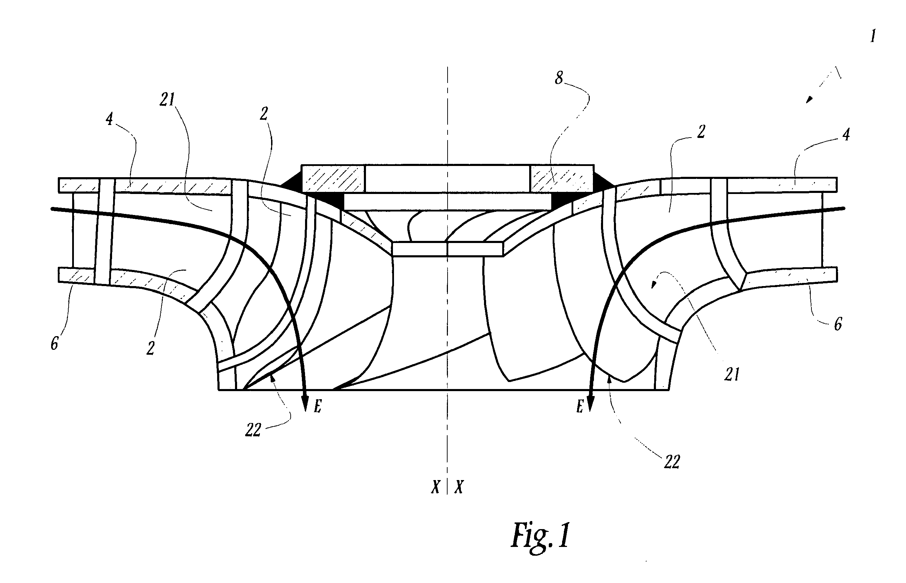

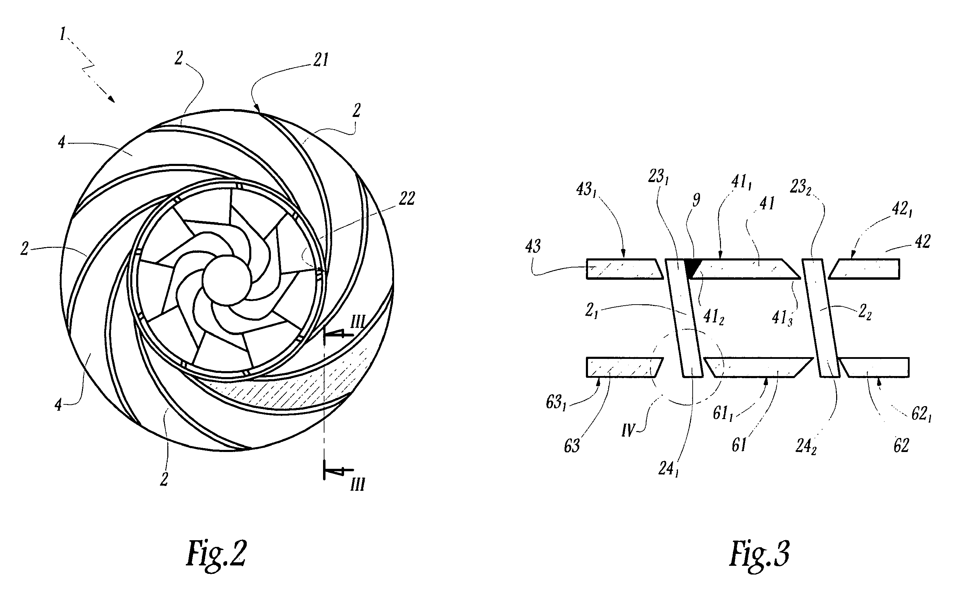

Les figures 1 et 2 représentent une roue 1 de turbine de type Francis qui tourne autour d'un axe vertical X-X qui est un axe central de la roue 1. Un écoulement E provenant d'une conduite non représentée, est destiné à traverser la roue 1 en direction d'un conduit d'aspiration non représenté. La roue 1 comprend des aubes 2 qui s'étendent entre un plafond 4 et une ceinture 6. Ces deux corps 4 et 6 sont à symétrie de révolution autour de l'axe X-X. Les aubes 2 sont réparties régulièrement autour de l'axe X-X.

Comme représenté plus précisément sur la figure 2, les neuf aubes 2, solidaires du plafond 4 et de la ceinture 6, sont incurvées. Les aubes 2 définissent chacune un bord d'attaque 21, tourné vers l'extérieur de la roue 1, et un bord de fuite 22, tourné vers l'axe X-X.

La roue 1 comprend également un plateau 8 d'accouplement de la roue 1 à un arbre non représenté de la turbine. Le plateau 8 peut être réalisé soit en tôle, soit de manière moulée. Le plateau 8 peut être ensuite soudé aux autres éléments composant la roue.

Comme représenté sur la figure 2, le plafond 4 comprend neuf éléments distincts, séparés chacun de l'élément adjacent par une aube 2. Sur la coupe de la figure 3, un premier élément 41 définit en partie le plafond 4. Un deuxième et un troisième éléments 42 et 43 du plafond 4 sont disposés de part et d'autre de l'élément 41. Cet élément 41 est séparé respectivement des deux éléments 42 et 43 par un bord supérieur et interne 23₁ ou 23₂ d'une première aube 2₁ et d'une deuxième aube 2₂.

En d'autres termes, le plafond 4 est constitué de neuf éléments 41, 42, 43... disposés chacun entre les bords supérieurs et internes 23₁, 23₂ ... d'aubes adjacentes 2₁, 2₂ .... Les bords 23₁, 23₂, ... des aubes 2₁, 2₂,... sont, quant à eux, engagés entre les éléments 41, 42, 43, ... formant le plafond 4.

De manière similaire au plafond 4, la ceinture 6 comprend neuf éléments. A la figure 3, un premier élément 61 est disposé entre deux autres éléments 62 et 63 de la ceinture. Cet élément 61 est séparé respectivement des éléments 62 et 63 par des bords inférieurs et externes 24₁ et 24₂ de la première aube 2₁ et de la deuxième aube 2₂.

On peut noter que le bord supérieur et interne 23₁ ou 23₂ de chacune des deux aubes 2₁ et 2₂ affleure la surface extérieure du plafond 4 formée par les surfaces supérieures respectives 41₁, 42₁, 43₁... des éléments 41, 42, 43 et équivalents. De même, le bord inférieur et externe 24₁ ou 24₂ de chacune de ces deux aubes affleure la surface extérieure de la ceinture 6 formée par les surfaces extérieures respectives 61₁, 62₁, 63₁... des éléments 61, 62, 63 et équivalents.

Les éléments de plafond 41, 42 et 43 et les éléments de ceinture 61, 62 et 63 sont rendus solidaires des aubes adjacentes par soudage. Ce procédé est avantageusement réalisé par voie extérieure, au niveau de la zone d'affleurement définie entre le bord d'une aube et une surface extérieure d'un élément de plafond ou de ceinture. On évite ainsi des liaisons soudées entre ces corps par l'intérieur de la roue, et plus précisément, dans les canaux hydrauliques définis entre deux aubes.

Pour ce faire, et comme représenté à la figure 3 qui est une coupe alors que le soudage est en cours, des bords 41₂ et 41₃ de l'élément 41 qui jouxtent respectivement les aubes 2₁ et 2₂ sont biseautés, de façon à créer avec les bords 23₁ et 23₂ des dièdres de réception de cordons de soudure. Ces bords définissent ainsi des chanfreins. Un cordon de soudure est visible à la figure 3, à la jonction entre l'élément 41 et l'aube 2₁, avec la référence 9.

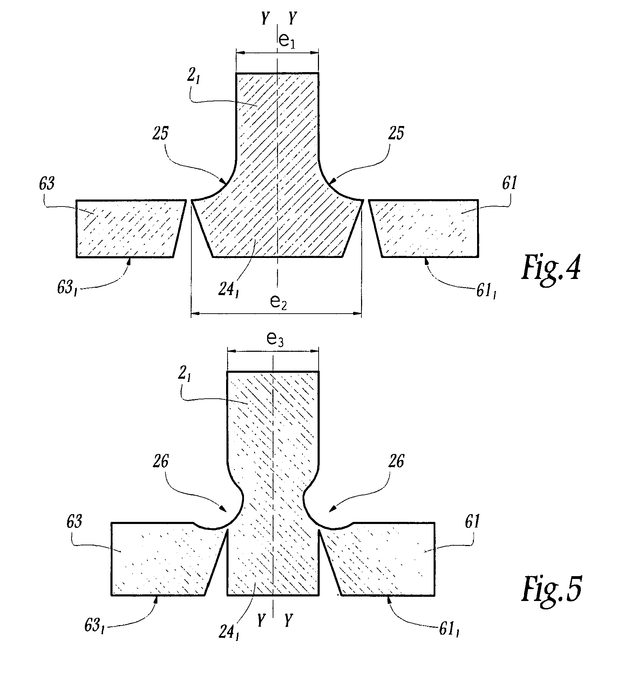

Dans les deuxième, troisième et quatrième modes de réalisation de l'invention représentés aux figures 4 à 7, les éléments analogues à ceux du premier mode de réalisation portent les mêmes références.

Les figures 4 et 5 représentent un agrandissement effectué au niveau de la zone de soudage entre une aube 2₁ et deux éléments de ceinture 61 et 63. Il est à noter que la zone de soudage est similaire entre une aube et un élément de plafond.

Afin de réduire les contraintes dans ce type de liaison, on évite de réaliser une liaison à angle droit entre l'aube et la ceinture adjacente. Pour ce faire, il est prévu d'aménager des congés de raccordement dans chaque aube.

Sur la figure 4 sont représentés deux congés de raccordement 25 qui sont aménagés dans la partie inférieure d'une aube 2₁ dans une portion disposée au-dessus de deux éléments de ceinture 61 et 63. La partie centrale de l'aube a une première épaisseur e₁ qui est sensiblement inférieure à l'épaisseur e₂ du bord inférieur et externe 24₁ de l'aube 2₁, lequel est engagé entre les éléments 61 et 63 de manière à affleurer les surfaces extérieures 61₁ et 63₁. Les congés de raccordement 25 sont sensiblement symétriques par rapport à un axe médian Y-Y de l'aube 2₁.

Pour la fabrication de l'aube 2₁, l'opérateur procède à la réalisation des congés de raccordement 25 dans une tôle d'épaisseur e₂ par usinage de cette tôle. Toutefois, la réalisation de tels congés de raccordement nécessite l'utilisation d'une quantité importante de matière destinée à être supprimée par ce procédé d'usinage.

Ainsi, à titre d'alternative représentée sur la figure 5, il est proposé d'utiliser une aube 2₁ d'épaisseur e₃ sensiblement identique à l'épaisseur e₁ de l'aube du deuxième mode de réalisation. Dans cette aube 2₁ sont directement usinés deux congés de raccordement 26 ménagés sur la partie inférieure de l'aube, au voisinage de son bord inférieur et externe 24₁ engagé entre deux éléments 61 et 63 de la ceinture. Ces congés 26 sont disposés de manière sensiblement symétrique par rapport à l'axe médian Y-Y de la section de l'aube 2₁. Ces congés correspondent à des congés latéraux aménagés dans l'aube 2₁ de telle manière qu'ils définissent un rétrécissement localisé à proximité de la zone de soudage. On peut donc se contenter d'un approvisionnement d'une tôle d'une épaisseur nominale e₃ limitée.

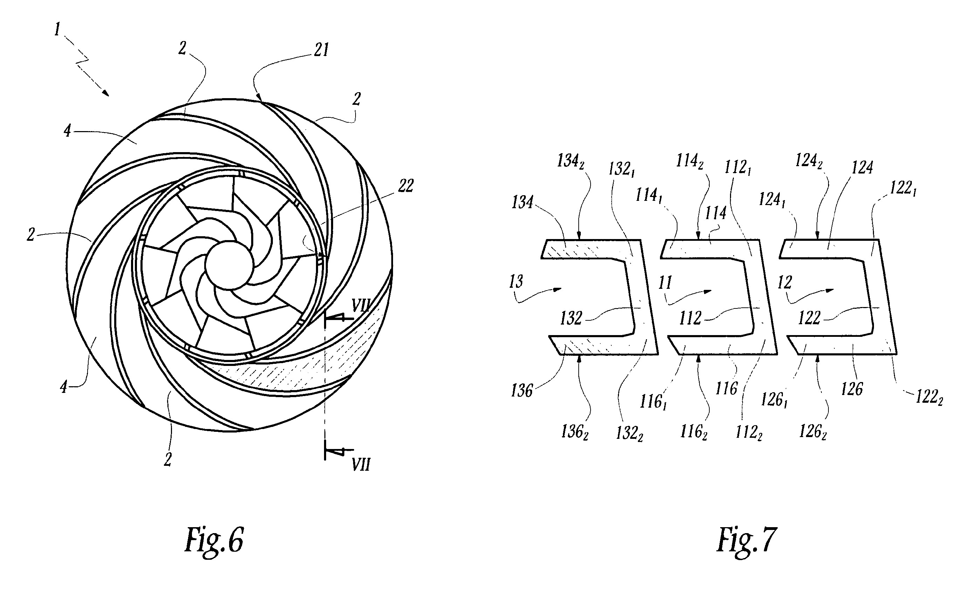

Les figures 6 et 7, qui ne font pas partie de la présente invention, représentent la roue 1, comprenant neuf sous-ensembles dont trois sont visibles à la figure 7, avec les références 11, 12 et 13. Le premier sous-ensemble 11 comporte une première partie de plafond 114 et une première partie de ceinture 116 qui sont reliées par une aube 112. Les trois parties 112, 114 et 116 peuvent être moulées ou soudées ensemble de manière à constituer un élément monobloc pouvant être fixé à d'autres éléments du même type, par soudage.

De manière similaire, les sous-ensembles 12 et 13 comprennent respectivement une deuxième partie de plafond 124 et une troisième partie de plafond 134 ainsi qu'une deuxième partie de ceinture 126 et une troisième partie de ceinture 136. Les parties 124 et 126 et les parties 134 et 136 sont chacune respectivement reliées par une aube 122 et une aube 132 par moulage ou par soudage.

Chacun de ces sous-ensembles 11, 12 et 13 a une section en forme de U couché.

Les parties 114 et 116 comprennent chacune un bord 114, et 116₁, respectivement en regard d'un bord supérieur et interne 132₁ et d'un bord inférieur et externe 132₂ de l'aube 132.

De la même manière, les parties 124 et 126 comprennent chacune un bord 124₁ et 126₁, respectivement en regard d'un bord supérieur et interne 112₁ et d'un bord inférieur et externe 112₂ de l'aube 112.

On peut également noter que l'aube 122 comprend un bord supérieur et interne 122₁ et un bord inférieur et externe 122₂.

Les deux parties de plafond et de ceinture de chacun des sous-ensembles 11, 12 et 13 sont respectivement munies d'une surface supérieure 114₂, 116₂, 124₂, 126₂, 34₂ et 136₂.

Ainsi, les bords des aubes 112, 122 et 132 sont engagés entre deux éléments de plafond ou de ceinture. En d'autres termes, chacun des bords inférieur et supérieur de l'aube correspondante affleure la surface supérieure du plafond et de la ceinture adjacente.

Les bords 114₁, 124₁, 116₁ et 126₁ sont biseautés de manière à créer respectivement avec les bords 132₁, 112₁, 132₂ et 112₂ des dièdres de réception de cordons de soudure non représentés. En d'autres termes, ces bords sont chanfreinés.

Cette approche modulaire permet de réaliser une solidarisation du sous-ensemble 11 avec, à la fois, le sous-ensemble 12 et le sous-ensemble 13, par un procédé de soudage qualifié d'extérieur. En d'autres termes, il n'est pas nécessaire de s'introduire au sein de la roue 1, à savoir entre le plafond et la ceinture, pour procéder au soudage dans un but de solidariser les parties du plafond et de la ceinture d'un premier sous-ensemble avec les parties correspondantes d'un deuxième sous-ensemble adjacent.

Par ailleurs, l'acheminement des éléments 2₁, 2₂, 41, 42, 43, 61, 62, 63,... ou des sous-ensembles 11, 12, 13 et équivalents constituant la roue sur son lieu d'utilisation est notamment amélioré en terme de délais, ce qui permet d'optimiser les coûts.

Il est à noter que la réalisation des congés de raccordement représentés sur les figures 4 et 5 peut également être effectuée dans les aubes moulées 112, 122 et 132.

A titre d'exemples non limitatifs, le procédé de soudage utilisé avec l'invention peut être le soudage par faisceau d'électrons ou le soudage laser.

En outre, on peut prévoir une roue comprenant un nombre d'éléments de plafond et/ou de ceinture différent de neuf.

## Revendications

1. Roue (1) de type Francis pour machine hydraulique, comportant :
- une ceinture (6) à symétrie de révolution autour d'un axe central (X-X) de la roue,
- un plafond (4) à symétrie de révolution autour de l'axe, et
- une pluralité d'aubes (2 ; 2₁, 2₂) s'étendant entre le plafond et la ceinture,
**caractérisée en ce que** la roue (1) comprend au moins deux éléments (61, 62, 63) définissant en partie au moins la ceinture (6) et/ou deux éléments (41, 42, 43) définissant en partie au moins le plafond (4), et **en ce qu'**au moins un bord (23₁, 23₂, 24₁, 24₂) d'une aube (2 ; 2₁, 2₂) est engagé entre les deux éléments définissant la ceinture (6) et/ou le plafond (4).

2. Roue selon la revendication 1, **caractérisée en ce que** le bord inférieur (24₁, 24₂) et/ou le bord supérieur (23₁, 23₂) d'au moins une aube (2 ; 2₁, 2₂) affleure la surface extérieure (41₁, 42₁, 43₁, 61₁, 62₁, 63₁) de la ceinture (6) et/ou du plafond (4).

3. Roue selon la revendication 1 ou 2, **caractérisée en ce que** la roue (1) comprend au moins deux éléments de ceinture (61, 62, 63) et deux éléments de plafond (41, 42, 43), chaque élément étant fixé entre deux aubes adjacentes (2₁, 2₂) par soudage.

4. Roue selon la revendication 1 ou 2, caractérisée en que la roue (1) comprend au moins un premier sous-ensemble (11, 12, 13), défini par une première partie de la ceinture (116, 126, 136) et une première partie du plafond (114, 124, 134), les deux parties étant reliées à une première aube (112, 122, 132), le premier sous-ensemble étant moulé, et un deuxième sous-ensemble (11, 12, 13), défini par une deuxième partie de la ceinture (116, 126, 136) et une deuxième partie du plafond (114, 124, 134), les deux parties étant reliées à une deuxième aube (112, 122, 132), le deuxième sous-ensemble étant moulé et soudé au premier sous-ensemble.

5. Roue selon l'une quelconque des revendications précédentes, **caractérisée en ce qu'**au moins une des aubes (2₁) comprend deux congés latéraux (25 ; 26) en regard l'un de l'autre et disposés à proximité d'au moins un bord (24₁) de soudage avec la ceinture (6) et/ou avec le plafond (4).

6. Roue selon la revendication 5, **caractérisée en ce que** les congés latéraux (25 ; 26) sont usinés dans l'aube (2₁).

7. Roue selon la revendication 5 ou 6, **caractérisée en ce que** les congés latéraux (26) définissent un rétrécissement local.

8. Machine hydraulique, **caractérisée en ce qu'**elle comprend une roue (1), selon l'une quelconque des revendications précédentes.

9. Procédé d'assemblage d'une roue (1) de type francis pour machine hydraulique, comprenant les étapes suivantes :
- fabrication d'éléments de ceinture (61, 62, 63) et/ou de plafond (41, 42, 43), et
- assemblage des éléments de ceinture et/ou de plafond à au moins une aube (2 ; 2₁, 2₂) par soudage et/ou par moulage, avec engagement d'au moins un bord (23₁, 23₂, 24₁, 24₂) d'une aube entre deux éléments de ceinture et/ou deux éléments de plafond.

## Patentansprüche

1. Rad (1) vom Francis-Typ für hydraulische Maschine, aufweisend:
ein Ringteil (6), das um eine zentrale Achse (X-X) des Rads umlaufsymmetrisch ist,
ein Oberteil (4), das um die Achse umlaufsymmetrisch ist, und
eine Mehrzahl von Schaufeln (2; 2₁; 2₂), die sich zwischen dem Ringteil und dem Oberteil erstrecken,
**gekennzeichnet dadurch, dass**
das Rad (1) aufweist wenigstens zwei Elemente (61, 62, 63), die teilweise wenigstens das Ringteil (6) definieren, und/oder zwei Elemente (41, 42, 43), die teilweise wenigstens das Deckelteil (4) definieren, und dadurch, dass wenigstens ein Rand (23₁, 23₂, 24₁, 24₂) von einer Schaufel (2; 2₁, 2₂) zwischen den beiden Elementen im Eingriff ist, welche das Ringteil (6) und/oder das Deckenteil definieren.

2. Rad gemäß Anspruch 1, **dadurch gekennzeichnet, dass** der untere Rand (24₁, 24₂) und/oder der obere Rand (23₁, 23₂) von wenigstens einer Schaufel (2; 2₁; 2₂) zu der äußeren Fläche (41₁, 42₁, 43₁, 61₁, 62₁, 63₁) des Ringteils (6) und/oder des Oberteils (4) bündig ist.

3. Rad gemäß Anspruch 1 oder 2, **dadurch gekennzeichnet, dass** das Rad (1) wenigstens zwei Ringteil-Elemente (61, 62, 63) und zwei Oberteil-Elemente (41, 42, 43) aufweist, wobei jedes Element zwischen zwei benachbarten Schaufeln (2₁, 2₂) mittels Schweißens befestigt ist.

4. Rad gemäß Anspruch 1 oder 2, **dadurch gekennzeichnet, dass** das Rad (1) aufweist wenigstens eine erste Untereinheit (11, 12, 13), die definiert ist durch einen ersten Ringteil-Teil (116, 126, 136) und einen ersten Oberteil-Teil (114, 124, 134), wobei die beiden Teile mit einer ersten Schaufel (112, 122, 132) verbunden sind, wobei die erste Untereinheit gegossen ist, und eine zweite Untereinheit (11, 12, 13), die definiert ist durch einen zweiten Ringteil-Teil (116, 126, 136) und einen zweiten Oberteil-Teil (114, 124, 134), wobei die beiden Teile mit einer zweiten Schaufel (112, 122, 132) verbunden sind, wobei die zweite Untereinheit gegossen ist und an die erste Untereinheit angeschweißt ist.

5. Rad gemäß einem der vorhergehenden Ansprüche, **dadurch gekennzeichnet, dass** wenigstens eine der Schaufeln (2₁) zwei einander gegenüberliegende seitliche Hohlkehlen (25, 26) hat, die proximal zu wenigstens einem Schweißrand (24₁) mit dem Ringteil (6) und/oder mit dem Oberteil (4) angeordnet sind.

6. Rad gemäß Anspruch 5, **dadurch gekennzeichnet, dass** die seitlichen Hohlkehlen (25, 26) in der Schaufel (2₁) spanend eingebracht sind.

7. Rad gemäß Anspruch 5 oder 6, **dadurch gekennzeichnet, dass** die seitlichen Hohlkehlen (25) eine lokale Verjüngung definieren.

8. Hydraulische Maschine, **dadurch gekennzeichnet, dass** sie ein Rad (1) gemäß einem der vorhergehenden Ansprüche aufweist.

9. Verfahren zum Zusammenbau eines Rads (1) von Francis--Typ für eine hydraulische Maschine, aufweisend die folgenden Schritte:
- Herstellung von Ringteil- (61, 62, 63) und/oder Oberteil-(41, 42, 43) Elementen, und
- Zusammenbau der Ringteil- und/oder Oberteil-Elemente mit wenigstens einer Schaufel (2; 2₁; 2₂) durch Schweißen und/oder durch Gießen, unter In-Eingriff-Bringen von wenigstens einem Rand (23₁, 23₂, 24₁, 24₂) einer Schaufel zwischen zwei Ringteil-Elemente und/oder zwei Oberteil-Elemente.

## Claims

1. A Francis-type runner (1) for a hydraulic machine, comprising:
- a band (6) with symmetry of revolution about a central axis (X-X) of the runner,
- a crown (4) with symmetry of revolution about the axis, and
- a plurality of blades (2; 2₁, 2₂) extending between the crown and the band,
**characterized in that** the runner (1) comprises at least two elements (61, 62, 63) at least partially defining the band (6) and/or two elements (41, 42, 43) at least partially defining the crown (4), and **in that** at least one edge (23₁, 23₂, 24₁, 24₂) of a blade (2; 2₁, 2₂) is engaged between the two elements defining the band (6) and/or the crown (4).

2. The runner as claimed in claim 1, **characterized in that** the lower edge (24₁, 24₂) and/or the upper edge (23₁, 23₂) of at least one blade (2; 2₁, 2₂) lies flush with the exterior surface (41₁, 42₁, 43₁, 61₁, 62₁, 63₁) of the band (6) and/or of the crown (4).

3. The runner as claimed in claim 1 or 2, **characterized in that** the runner (1) comprises at least two band elements (61, 62, 63) and two crown elements (41, 42, 43), each element being fixed between two adjacent blades (2₁, 2₂) by welding.

4. The runner as claimed in claim 1 or 2, **characterized in that** the runner (1) comprises at least one first subassembly (11, 12, 13) defined by a first part of the band (116, 126, 136) and a first part of the crown (114, 124, 134), the two parts being connected to a first blade (112, 122, 132), the first subassembly being cast, and a second subassembly (11, 12, 13), defined by a second part of the band (116, 126, 136) and a second part of the crown (114, 124, 134), the two parts being connected to a second blade (112, 122, 132), the second subassembly being cast and welded to the first subassembly.

5. The runner as claimed in any one of the preceding claims, **characterized in that** at least one of the blades (2₁) comprises two lateral fillets (25; 26) facing one another and positioned near at least one edge (24₁) for welding to the band (6) and/or to the crown (4).

6. The runner as claimed in claim 5, **characterized in that** the lateral fillets (25; 26) are machined in the blade (2₂).

7. The runner as claimed in claim 5 or 6, **characterized in that** the lateral fillets (26) define a local narrowing.

8. A hydraulic machine, **characterized in that** it comprises a runner (1) as claimed in any one of the preceding claims.

9. A method of assembling a Francis-type runner (1) for a hydraulic machine, comprising the following steps:
- manufacturing band elements (61, 62, 63) and/or crown elements (41, 42, 43), and
- assembling the band elements and/or crown elements with at least one blade (2; 2₁, 2₂) by welding and/or through casting, with at least one edge (23₁, 23₂, 24₁, 24₂) of one blade being engaged between two band elements and/or two crown elements.
